# EUROPÄISCHE PATENTSCHRIFT

(11) **EP 1 308 563 B1**
(45) Veröffentlichungstag und Bekanntmachung des Hinweises auf die Patenterteilung: **26.04.2006**
(21) Anmeldenummer: 02405923.0
(22) Anmeldetag: 30.10.2002
(51) Int. Cl.: E03B 7/09, E03B 7/00

(54) **Registriereinrichtung mit Installationsvorrichtung und Registriergerät, Verfahren zum Registrieren einer Installationsvorrichtung, Installationsvorrichtung und Rohrstück oder Stange für eine solche Registriereinrichtung**
Recording device with installation device and recording apparatus, method for recording an installation device, installation device and conduit or bar for such a recording device
Dispositif d'enregistrement avec dispositif d'installation et appareil enregistreur, méthode de régistration d'un dispositif d'installation, dispositif d'installation et conduit ou barre pour un tel dispositif d'enregistrement

(30) Priorität: 01.11.2001 CH 20032001
(43) Veröffentlichungstag der Anmeldung: 07.05.2003
(73) Patentinhaber: GEBERIT TECHNIK AG, 8645 Jona (CH)
(72) Erfinder: Von Flüe, Peter, 9113 Degersheim (CH); Holdener, Xaver, 8852 Altendorf (CH)
(74) Vertreter: Groner, Manfred

(56) Entgegenhaltungen:
- EP-A- 0 512 412
- CH-A- 690 593
- DE-A- 2 757 363
- DE-A- 3 705 994
- DE-A- 3 715 908
- DE-A- 4 323 042
- PATENT ABSTRACTS OF JAPAN vol. 2002, no. 04, 4. August 2002 (2002-08-04) & JP 2001 346308 A (HITACHI CABLE LTD), 14. Dezember 2001 (2001-12-14)

## Beschreibung

Die Erfindung betrifft eine Registriereinrichtung nach dem Oberbegriff des Anspruchs 1. Die Erfindung betrifft zudem ein Verfahren zum Registrieren einer Installationsvorrichtung der Registriereinrichtung sowie für eine solche Vorrichtung vorgesehene Rohrleitungen oder Profilstangen.

Im sanitären Bereich müssen insbesondere Rohrleitungssysteme zum Erstellen von Nachkalkulationen oder zum Erfassen und Verrechnen von Änderungen gegenüber der Planung registriert werden. Mit einer solchen Registrierung werden die verbauten Teile, also beispielsweise Fittinge und Rohrstücke erfasst und in einer Stückliste zusammengestellt. Bisher wurden zur Registrierung auch bei umfangreichen Rohrleitungssystemen die Rohrstücke von Hand abgemessen und die Fittinge gezählt. Bei Rohrleitungssystemen mit sehr vielen Rohrstücken und Fittingen ist dies jedoch sehr zeitaufwändig.

Die DE 37 05 994 A betrifft eine Vorrichtung und Messverfahren zur berührungslosen Längenmessung von Rohren oder Stäben. Hierzu ist eine Traverse vorgesehen, die in vorbestimmten Abständen mehrere Lichtschranken aufweist und die mit einem Linearantrieb verschiebbar ist. Das zu messende Rohr wird auf eine Auflage abgelegt. Durch Verschieben der Traverse entlang des Rohres wird deren Länge bestimmt. Rohre im verbauten Zustand können mit dieser Vorrichtung weder gemessen noch registriert werden.

Die DE 37 15 908 A betrifft eine Einrichtung zur Längenmessung. Diese weist einen Massstab auf, auf dem Markierungen angebracht sind. Die Markierungen werden mit einem Detektor abgetastet, der an einem gegen den Massstab verschiebbaren Schlitten angebracht ist. Mit dieser Einrichtung ist eine Registrierung von verbauten Teilen weder möglich noch vorgesehen.

Die DE 43 23 042 A offenbart einen mit Längenmarkierungen versehenen Schlauch. Die Längenmarkierungen sind Striche von einer bestimmten Länge und ermöglichen eine Festlegung der Position, in welcher bei einer vorgegebenen Schlauchlänge der Schlauch abgeschnitten werden muss.

Die CH 690 593 A betrifft ebenfalls eine Längenmarkierung an einem Rohr, die das Abschneiden eines Abschnittes mit einer vorbestimmten Länge erleichtert.

Der Erfindung liegt die Aufgabe zugrunde, eine Registriereinrichtung zu schaffen, die eine einfachere Registrierung ermöglicht. Diese Registrierung soll auch direkt vor Ort vorgenommen werden können.

Die Aufgabe ist gemäss Anspruch 1 gelöst. Eine solche Registriereinrichtung eignet sich insbesondere für Rohrleitungssysteme und Montagegestelle. Die Rohrstücke bzw. Stangen werden vorzugsweise bereits in der Produktion mit einer fortlaufenden Codierung versehen, welche beispielsweise die Art des Rohrstückes bzw. der Verbindungsstange enthält und in fixen Abständen angeordnet ist. Das Registriergerät kann ein einfaches Lesegerät sein. Mit diesem wird bei einem Rohrstück bzw. einer Verbindungsstange Anfang- und Endpunkt gelesen. Mit einer absoluten Differenzrechnung kann dann in einem geeigneten Rechner die Rohrlänge bestimmt werden. Eine solche Registriereinrichtung ermöglicht ein sehr einfaches und automatisches Registrieren.

Nach einer Weiterbildung der Erfindung ist vorgesehen, dass die Codierung lediglich auf den länglichen Verbindungsteilen, also somit auf den Rohrstücken bzw. Verbindungsstangen angebracht ist. Die Verbindungsteile, insbesondere Fittinge werden über die Rohrstücke bzw. Verbindungsstangen identifiziert. Auf dem Registriergerät muss dann lediglich die Art des Verbindungsteils, also beispielsweise Kunstoff-Fitting, Messing-Fitting, Armatur usw. eingegeben werden. Die Verbindungsteile können zusätzlich mit einer Codierung zur Identifikation und zur berührungslosen Erfassung versehen sein. Beim Registrieren müssen dann somit lediglich die länglichen Verbindungsteile, also insbesondere die Rohrstücke und Verbindungsstangen mit dem Registriergerät identifiziert werden. In einem geeigneten Rechner wird dann eine Stückliste erstellt, die gekoppelt mit einer Produktdatenbank die exakte Rechnungsstellung ermöglicht.

Die Codierung besteht nach einer Weiterbildung der Erfindung aus mehreren Informationscode wie Strichcode die mit einem optischen Lesegerät gelesen werden können und die beispielsweise auf der Aussenseite der codierten Teile aufgedruckt ist. Die Strichcode enthalten die oben genannten Angaben über die codierten Teile.

Nach einer Weiterbildung der Erfindung ist die Codierung spiralförmig auf den codierten Teilen aufgebracht. Diese ermöglicht einerseits eine einfache Herstellung einer solchen Codierung und anderseits die Möglichkeit, diese in jeder Position zu lesen.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Fig. 1 schematisch eine erfindungsgemässe Registriereinrichtung und
Fig. 2 schematisch ein erfindungsgemässes Rohrstück mit einer Codierung.

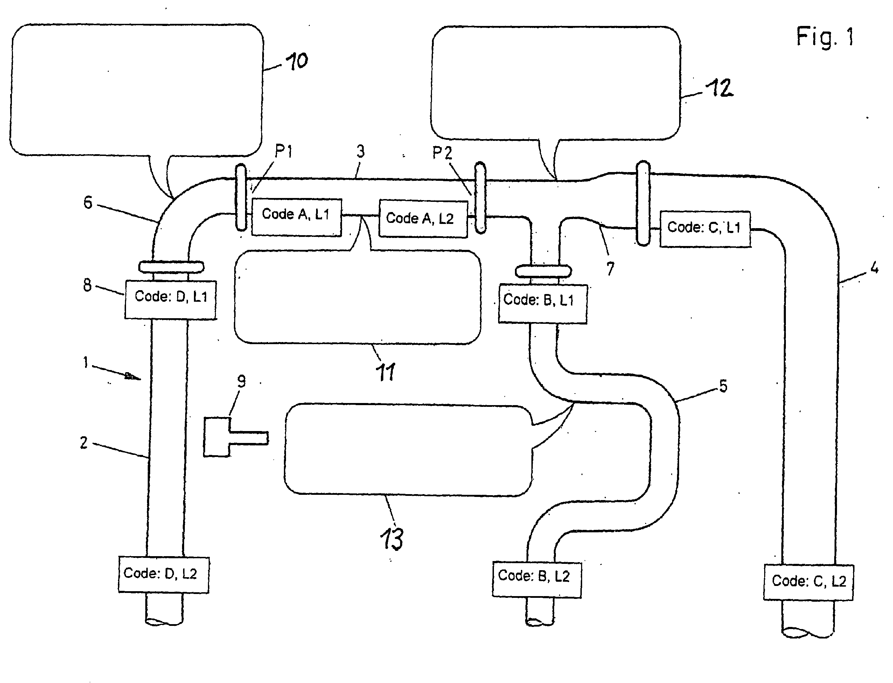

Die Fig. 1 zeigt einen Abschnitt eines Rohrleitungssystems 1, das Rohrstücke 2 - 5 sowie Fittinge 6 und 7 aufweist. Die Fittinge 6 und 7 sind wie üblich ausgebildet und beispielsweise Kunststoff-Fittinge, Messing-Fittinge oder Press-Fittinge. Zusätzlich können hier auch Armaturen an die Rohrstücke 2 bis 5 angeschlossen werden. Solche Armaturen sind beispielsweise Auslaufarmaturen. Die Rohrstücke 2 bis 5 sind beispielsweise Wasserrohre, sie können aber auch andere Rohre beispielsweise Gasrohre usw. sein. Wie ersichtlich können die Rohrstücke 1 - 5 gerade, gebogen oder sonstwie geformt sein. Sie können auch unterschiedliche Durchmesser aufweisen. Beispielsweise weist das Rohrstück 4 einen wesentlich grösseren Durchmesser auf, als das Rohrstück 2. Auch die Art der Rohrstücke 2 - 5 kann unterschiedlich sein.

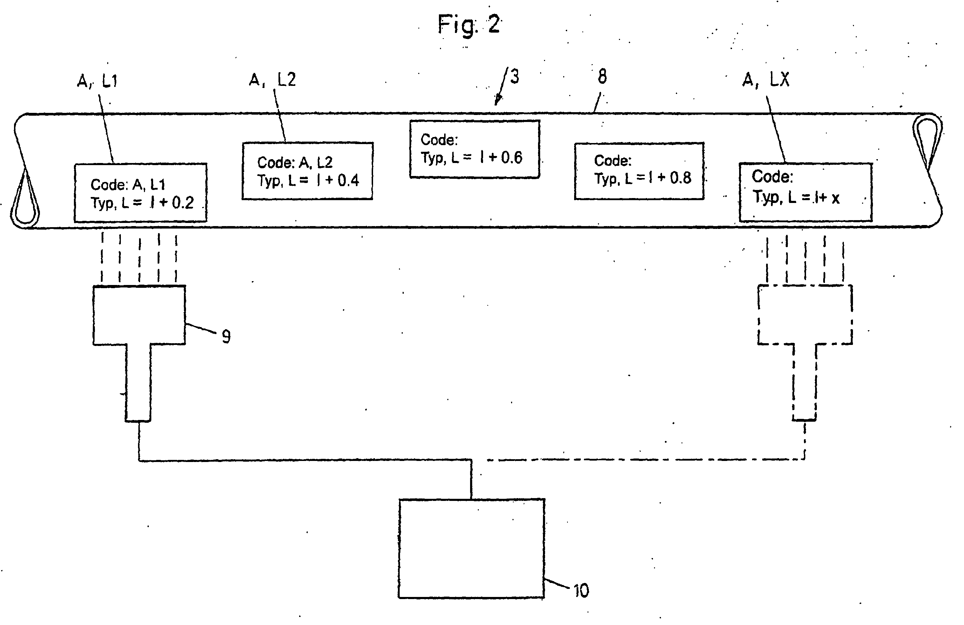

Auf den Rohrstücken 2 - 5 ist gemäss Fig. 2 aussenseitig eine Codierung 8 aufgebracht, beispielsweise aufgedruckt oder geprägt. Diese Codierung besteht aus mehreren Code A, die in gleichen Abständen vorzugsweise spiralförmig auf der Aussenseite der Rohrstücke 2 - 5 aufgebracht sind. Diese Code A sind beispielsweise Strichcode die einen "unendlichen" Massstab sowie Angaben zu den Rohrstücken 2 - 5 enthalten. Die Fig. 2 zeigt auf dem Rohrstück 3 ganz links den Code A, L1 mit der Länge L=1+0,2. Der nächste Code A, L2 markiert die Länge L=1+0,4. Der Abstand zwischen dem Code A, L1 und dem Code A, L2 beträgt in diesem Fall 0,2 m. Die Abstände zwischen benachbarten Code ist immer gleich. Dieser Abstand kann aber auch kürzer oder länger sein. Ausser der genannten Längenangabe enthalten die Code A jeweils Angaben, mit denen die Rohrstücke 2 - 5 identifiziert werden. Diese Angaben können beispielsweise die Grösse des Durchmessers und/oder den Rohrtyp enthalten. Die Code A sind beispielsweise Strichcode, die an sich bekannt sind und die beispielsweise auf die Aussenseite der Rohrstücke 2 - 5 aufgedruckt sind. Solche Strichcode können bereits bei der Herstellung des Rohres in einem kontinuierlichen Verfahren aufgedruckt werden. Die Rohrstücke 2 - 5 werden dann somit von einem Rohr abgelängt, das die Codierung 8 bereits enthält.

Die Codierung 8 wird mit einem Registriergerät 9 gelesen, das beispielsweise ein optisches Lesegerät ist. Das Registriergerät 9 ermöglicht ein berührungsloses Ablesen der Codierung 8, in dem mit diesen die Rohrstücke 2 - 5 abgelesen werden. Mit dem Registriergerät 9 wird bei jedem Rohrstück 2- 5 ein Anfangpunkt P1 und ein Endpunkt P2 gelesen. In einem Rechner 10, der im Registriergerät 9 integriert sein kann, wird mit diesen beiden Messwerten mittels einer absoluten Differenzrechnung die Rohrlänge des entsprechenden Rohrstückes 3 bestimmt.

Die Fittinge 6 und 7 sind vorzugsweise nicht mit einer Codierung versehen. Diese Fittinge 6 und 7, welche für die Registrierung selbstverständlich auch erfasst werden müssen, werden wie folgt bestimmt. Zur Registrierung beispielsweise des Fittings 6 wird im Registriergerät 9 der Typ dieses Fittings 6 eingegeben. Beispielsweise wird eingegeben, dass es sich um einen Kunststoff-Fitting, Messing-Fitting oder eine Armatur handelt. Als nächstes werden an den Rohrstücken 2 und 3 die Code D und Code A gelesen. Aufgrund dieser Angaben kann der Rechner den Fitting 6 eindeutig definieren. Beim Fitting 7 werden nach dem Wählen des Typs die Code A, Code B und Code C gelesen. Der Rechner kann aufgrund dieser Angaben den Fitting 7 als einen solchen mit 3 Anschlüssen bestimmen.

Gemäss Figur 1 ergeben sich somit folgende Messvorgäge:
An der Stelle 10:
   Fitting bestimmen
      1. Typ wählen, KS, MS, Armatur
      2. Winkel wählen
      3. Code A, Code D lesen
      => Fitting definiert
An der Stelle 11:
   Länge A bestimmen
      1. Code A,L1, Code A,L2 lesen
      => Länge definiert
An der Stelle 12:
   Fitting bestimmen
      1. Typ wählen, KS, MS, Armatur
      2. Code A, Code B, Code C lesen
      => Fitting definiert
An der Stelle 13:
   Länge B bestimmen
      1. Code B,L1, Code B,L2 lesen
      => Länge definiert

Zur Registrierung müssen beim Rohrleitungssystem 1 somit die Rohrstücke 2 - 5 abgelesen und zu jedem Fitting 6 und 7 der entsprechende Typ eingegeben werden. Die Nachkalkulation kann dann gekoppelt mit einer Produktdatenbank ohne weiteres vom Rechner 10 durchgeführt werden. Mit dem Ergebnis dieser Registrierung ist eine exakte Rechnungsstellung möglich. In der Praxis enthält ein solches Rohrleitungssystem 1 sehr viele Fittinge und entsprechend viele Rohrleitungsstücke. Die erfindungsgemässe Registriereinrichtung kann aber auch ein anderes Installationssystem, insbesondere ein Montagegestell sein, das Verbinder sowie Verbindungsstangen, insbesondere Profilstangen aufweist. Die Codierung ist in diesem Fall auf den Verbindungsstangen aufgebracht. Die Verbinder entsprechen den Fittingen 6 und 7. Ein solches Montagegestell ist beispielsweise unter der Bezeichnung GIS bekannt.

## Patentansprüche

1. Registriereinrichtung mit einer Installationsvorrichtung (1), insbesondere für den Sanitärbereich, und einem Registriergerät (9), **dadurch gekennzeichnet, dass** die Installationsvorrichtung (1) eine fortlaufende Codierung (8) aufweist, die Angaben zu zu verbauenden Teilen (2-5; 6, 7) der Installationsvorrichtung (1) enthält, und dass die Codierung (8) der Installationsvorrichtung (1) im eingebauten Zustand mit dem Registriergerät (9) lesbar ist.

2. Einrichtung nach Anspruch 1, **dadurch gekennzeichnet, dass** die zu verbauenden Teile (2-5; 6, 7) Rohrstücke (2-5) oder Stangen aufweisen und dass die Codierung (8) auf diesen Rohrstücken oder Stangen angebracht ist.

3. Einrichtung nach Anspruch 1 oder 2, **dadurch gekennzeichnet, dass** die Codierung (8) in einem "unendlichen" Massstab aufgebracht ist.

4. Einrichtung nach einem der Ansprüche 1 bis 3, **dadurch gekennzeichnet, dass** die Codierung (8) spiralförmig auf länglichen Teilen (2-5) aufgebracht ist.

5. Einrichtung nach einem der Ansprüche 1 bis 4, **dadurch gekennzeichnet, dass** die Codierung (8) so ausgebildet ist, dass sie mit einem optischen Registriergerät (9) lesbar ist.

6. Einrichtung nach einem der Ansprüche 1 bis 5, **dadurch gekennzeichnet, dass** die Codierung (8) eine Mehrzahl von Strichcode (A) aufweist.

7. Einrichtung nach einem der Ansprüche 1 bis 6, **dadurch gekennzeichnet, dass** lediglich längliche Teile (5-7) codiert sind.

8. Einrichtung nach einem der Ansprüche 1 bis 7, **dadurch gekennzeichnet, dass** längliche Teile (5-7) jeweils von einem Anfangspunkt (P1) bis zu einem Endpunkt (P2) codiert sind.

9. Einrichtung nach einem der Ansprüche 1 bis 8, **dadurch gekennzeichnet, dass** das Registriergerät (9) ein Handgerät ist.

10. Einrichtung nach einem der Ansprüche 1 bis 9, **dadurch gekennzeichnet, dass** die Installationsvorrichtung Rohrstücke (2-5) und Fittinge (6, 7) aufweist, wobei die Rohrstücke (2-5) jeweils auf ihrer ganzen Länge codiert sind.

11. Einrichtung nach einem der Ansprüche 1 bis 10, **dadurch gekennzeichnet, dass** das Registriergerät (9) ein berührungsloses Ablesen der Codierung (8) ermöglicht.

12. Verfahren zur Registrierung einer Installationsvorrichtung nach Anspruch 1, **dadurch gekennzeichnet, dass** die fortlaufende Codierung (8) der verbauten Teile (2-5; 6, 7) mit dem Registriergerät (9) berührungslos abgefahren wird und dass die gelesenen Daten in einem Rechner (10) verarbeitet werden.

13. Verfahren nach Anspruch 12, **dadurch gekennzeichnet, dass** bei länglichen Teilen (2-5), wie beispielsweise Rohrstücken oder Stangen jeweils ein Anfangspunkt (P1) und ein Endpunkt (P2) gelesen wird und dass die Längen dieser Teile (2-5) mittels einer Differenzrechnung bestimmt werden.

14. Verfahren nach Anspruch 12 oder 13, **dadurch gekennzeichnet, dass** die Codierung (8) Angaben über die codierten Teile (2-5) aufweist, derart, dass diese Teile (2-5) aufgrund dieser Angaben identifizierbar sind.

15. Verfahren nach einem der Ansprüche 12 bis 14, **dadurch gekennzeichnet, dass** die Codierung (8) einen "unendlichen" Massstab aufweist.

16. Installationsvorrichtung für eine Registriereinrichtung gemäss Anspruch 1, **dadurch gekennzeichnet, dass** sie ein Rohrleitungssystem (1) oder ein Montagegestell ist.

17. Installationsvorrichtung nach Anspruch 16, **dadurch gekennzeichnet, dass** die Codierung (8) Angaben über die Art und den Durchmesser von Rohrstücken (2-5) aufweist.

18. Installationsvorrichtung nach Anspruch 16 oder 17, **dadurch gekennzeichnet, dass** die Codierung (8) auf der Außenseite länglicher Teile (2-5) spiralförmig angeordnet ist.

19. Rohrstück oder Stange für eine Registriereinrichtung gemäss Anspruch 2, **gekennzeichnet durch** eine fortlaufende Codierung (8), die Angaben zur Identifizierung der zu verbauenden Teile (2-5; 6, 7) des Rohrstücks bzw. der Stange aufweist.

20. Rohrstück oder Stange nach Anspruch 19, **dadurch gekennzeichnet, dass** die Codierung (8) spiralförmig ausgebildet ist.

## Claims

1. Recording arrangement having an installation apparatus (1), in particular for the sanitation industry, and a recording device (9), **characterized in that** the installation apparatus (1) has a continuous coding (8) which contains information about parts (2-5; 6, 7) of the installation apparatus (1) which are to be fitted, and **in that** the coding (8) of the installation apparatus (1) can be read by the recording device (9) in the installed state.

2. Arrangement according to Claim 1, **characterized in that** the parts (2-5; 6, 7) to be fitted have pipe sections (2-5) or rods, and **in that** the coding (8) is provided on these pipe sections or rods.

3. Arrangement according to Claim 1 or 2, **characterized in that** the coding (8) is provided on an "infinite" scale.

4. Arrangement according to one of Claims 1 to 3, **characterized in that** the coding (8) is provided on elongate parts (2-5) in a spiral-like manner.

5. Arrangement according to one of Claims 1 to 4, **characterized in that** the coding (8) is formed in such a way that it can be read by an optical recording device (9).

6. Arrangement according to one of Claims 1 to 5, **characterized in that** the coding (8) has a plurality of bar codes (A).

7. Arrangement according to one of Claims 1 to 6, **characterized in that** only elongate parts (5-7) are coded.

8. Arrangement according to one of Claims 1 to 7, **characterized in that** elongate parts (5-7) are each coded from a start point (P1) to an end point (P2).

9. Arrangement according to one of Claims 1 to 8, **characterized in that** the recording device (9) is a handheld device.

10. Arrangement according to one of Claims 1 to 9, **characterized in that** the installation apparatus has pipe sections (2-5) and fittings (6, 7), the pipe sections (2-5) each being coded over their entire length.

11. Arrangement according to one of Claims 1 to 10, **characterized in that** the recording device (9) allows the coding (8) to be read in a contactless fashion.

12. Method for recording an installation apparatus according to Claim 1, **characterized in that** the recording device (9) passes over the continuous coding (8) of the fitted parts (2-5; 6, 7) in a contactless fashion, and **in that** the read data is processed in a computer (10).

13. Method according to Claim 12, **characterized in that**, for elongate parts (2-5), for example pipe parts or rods, a start point (P1) and an end point (P2) are read in each case, and **in that** the lengths of these parts (2-5) are determined by means of a difference calculation.

14. Method according to Claim 12 or 13, **characterized in that** the coding (8) has information about the coded parts (2-5) such that these parts (2-5) can be identified on the basis of this information.

15. Method according to one of Claims 12 to 14, **characterized in that** the coding (8) has an "infinite" scale.

16. Installation apparatus for a recording arrangement according to Claim 1, **characterized in that** it is a pipeline system (1) or a mounting frame.

17. Installation apparatus according to Claim 16, **characterized in that** the coding (8) has information about the type and the diameter of pipe parts (2-5).

18. Installation apparatus according to Claim 16 or 17, **characterized in that** the coding (8) is arranged on the outside of elongate parts (2-5) in a spiral-like manner.

19. Pipe part or rod for a recording arrangement according to Claim 2, **characterized by** a continuous coding (8) which has information for identifying the parts (2-5; 6, 7) of the pipe section or the rod which are to be fitted.

20. Pipe part or rod according to Claim 19, **characterized in that** the coding (8) is formed in a spiral-like manner.

## Revendications

1. Dispositif d'enregistrement comprenant un dispositif d'installation (1), notamment pour le domaine sanitaire, et un appareil d'enregistrement (9), **caractérisé en ce que** le dispositif d'installation (1) présente un codage continu (8) qui contient des indications sur des pièces à monter (2-5 ; 6, 7) du dispositif d'installation (1) et que le codage (8) du dispositif d'installation (1) en état monté peut être lu avec l'appareil d'enregistrement (9).

2. Dispositif selon la revendication 1, **caractérisé en ce que** les pièces à monter (2-5 ; 6, 7) présentent des éléments tubulaires (2-5) ou des tiges et que le codage (8) est appliqué sur ces éléments tubulaires ou ces tiges.

3. Dispositif selon la revendication 1 ou 2, **caractérisé en ce que** le codage (8) est appliqué dans une échelle « infinie ».

4. Dispositif selon l'une des revendications 1 à 3, **caractérisé en ce que** le codage (8) est appliqué en forme de spirale sur les pièces allongées (2-5).

5. Dispositif selon l'une des revendications 1 à 4, **caractérisé en ce que** le codage (8) est configuré de telle sorte qu'il peut être lu avec un appareil d'enregistrement optique (9).

6. Dispositif selon l'une des revendications 1 à 5, **caractérisé en ce que** le codage (8) présente une pluralité de codes à barres (A).

7. Dispositif selon l'une des revendications 1 à 6, **caractérisé en ce que** seules les pièces allongées (5-7) sont codées.

8. Dispositif selon l'une des revendications 1 à 7, **caractérisé en ce que** les pièces allongées (5-7) sont à chaque fois codées d'un point de départ (P1) à un point final (P2).

9. Dispositif selon l'une des revendications 1 à 8, **caractérisé en ce que** l'appareil d'enregistrement (9) est un appareil portable.

10. Dispositif selon l'une des revendications 1 à 9, **caractérisé en ce que** le dispositif d'installation présente des éléments tubulaires (2-5) et des raccords (6, 7), les éléments tubulaires (2-5) étant à chaque fois codés sur toute leur longueur.

11. Dispositif selon l'une des revendications 1 à 10, **caractérisé en ce que** l'appareil d'enregistrement (9) permet une lecture sans contact du codage (8).

12. Procédé pour enregistrer un dispositif d'installation selon la revendication 1, **caractérisé en ce que** le codage continu (8) des pièces montées (2-5 ; 6, 7) est inspecté sans contact avec l'appareil d'enregistrement (9) et que les données lues sont traitées dans un ordinateur (10).

13. Procédé selon la revendication 12, **caractérisé en ce que** dans le cas des pièces allongées (2-5), comme, par exemple, des éléments tubulaires ou des tiges, un point de départ (P1) et un point final (P2) sont à chaque fois lus et que les longueurs de ces pièces (2-5) sont déterminées au moyen d'un calcul de différence.

14. Procédé selon la revendication 12 ou 13, **caractérisé en ce que** le codage (8) présente des indications sur les pièces (2-5) codées de telle sorte que ces pièces (2-5) puissent être identifiées en se basant sur ces indications.

15. Procédé selon l'une des revendications 12 à 14, **caractérisé en ce que** le codage (8) présente une échelle « infinie ».

16. Dispositif d'installation pour un appareil d'enregistrement selon la revendication 1, **caractérisé en ce qu'**il est un système de conduites (1) ou un bâti de montage.

17. Dispositif d'installation selon la revendication 16, **caractérisé en ce que** le codage (8) présente des indications sur la nature et le diamètre des éléments tubulaires (2-5).

18. Dispositif d'installation selon la revendication 16 ou 17, **caractérisé en ce que** le codage (8) est disposé en forme de spirale sur le côté extérieur des pièces allongées (2-5).

19. Élément tubulaire ou tige pour un dispositif d'enregistrement selon la revendication 2, **caractérisé par** un codage continu (8) qui présente des indications destinées à l'identification des pièces à monter (2-5 ; 6, 7) de l'élément tubulaire ou de la tige.

20. Élément tubulaire ou tige selon la revendication 19, **caractérisé en ce que** le codage (8) est configuré en forme de spirale.
